# EUROPÄISCHE PATENTSCHRIFT

(11) **EP 0 981 783 B1**
(45) Veröffentlichungstag und Bekanntmachung des Hinweises auf die Patenterteilung: **12.06.2002**
(21) Anmeldenummer: 98909480.0
(22) Anmeldetag: 27.02.1998
(51) Int. Cl.: G05B 9/03

(54) **MIKROPROZESSORSYSTEM FÜR KFZ-REGELUNGSSYSTEME**
MICROPROCESSOR SYSTEM FOR AUTOMOBILE CONTROL SYSTEMS
SYSTEME DE MICROPROCESSEUR POUR SYSTEMES DE REGULATION DE VEHICULES AUTOMOBILES

(30) Priorität: 16.05.1997 DE 19720618
(43) Veröffentlichungstag der Anmeldung: 01.03.2000
(73) Patentinhaber: Continental Teves AG & Co. oHG, 60488 Frankfurt am Main (DE)
(72) Erfinder: GIERS, Bernhard, D-60320 Frankfurt am Main (DE)
(86) Internationale Anmeldenummer: EP9801108
(87) Internationale Veröffentlichungsnummer: WO9853374

(56) Entgegenhaltungen:
- EP-A- 0 346 804
- EP-A- 0 399 308
- DE-A- 3 225 455
- DE-A- 3 234 637
- DE-A- 4 137 124
- DE-A- 4 341 082
- DE-A- 19 529 434
- US-A- 4 672 530
- US-A- 5 583 769
- SMITH S E: "TRIPLE REDUNDANT FAULT TOLERANCE: A HARDWARE-IMPLEMENTED APPROACH" ISA TRANSACTIONS, Bd. 30, Nr. 4, 1.Januar 1991, Seiten 87-95, XP000275596
- GUDEA D D ET AL: "FAULT TOLERANT POWER CONTROLLER" PROCEEDINGS OF THE INTERSOCIETY ENERGY CONVERSION ENGINEERING CONFERENCE. (IECEC), WASHINGTON, AUG. 6 - 11, 1989, Bd. VOL. 1, Nr. CONF. 24, 6.August 1989, JACKSON W D;HULL D A, Seiten 231-237, XP000078771

## Beschreibung

Die Erfindung bezieht sich auf ein Mikroprozessorsystem für KFZ-Regelungssysteme mit redundanter Datenverarbeitung, insbesondere für sicherheitskritische Regelungen, mit drei Zentraleinheiten, die über separate Bus-Systeme mit Festwertspeichern und Schreib-Lesespeichern, mit Eingabe- und Ausgabeeinheiten und mit Vergleichern, die die Ergebnisse und/ oder Zwischenergebnisse der Datenverarbeitung auf Übereinstimmung überprüfen, zu mehreren Datenverarbeitungssystemen verbunden sind, wobei die Zentraleinheiten über die Bus-Systeme miteinander kommunizieren und das gleiche Programm abarbeiten und wobei die Bus-Systeme untereinander durch Bypässe verbunden sind, die den Zentraleinheiten ein gemeinsames Lesen und Abarbeiten der anstehenden Daten und Befehle ermöglichen.

Ein solches System ist aus der WO 98/48326 bekannt. Die drei Zentraleinheiten bilden bei diesem System zusammen mit den Speichern, mit Eingabe- und Ausgabeeinheiten und mit Peripherie-Komponenten zwei vollständige und ein unvollständiges Datenverarbeitungssystem, die derart erweitert und zusammengeschaltet sind, dass bei Ausfall einer Zentraleinheit oder zugehöriger Komponenten durch Majoritätsentscheidung in einer Identifizierungsstufe die fehlerhafte Zentraleinheit identifiziert und eine Notlauffunktion aufrechterhalten wird. Die beiden vollständigen Datenverarbeitungssystem enthalten jeweils ausreichend Speicherplätze für die individuelle Programmabarbeitung, während das unvollständige System lediglich Speicherplätze für die (wenigen) Prüfdaten bzw. für die Redundanzfunktion besitzt.

In der Veröffentlichung von Steven E. Smith mit dem Titel "Triple Redundant Fault Tolerance: A Hardware-Implemented Approach" (ISA Transactions, Bd. 30, Nr.4, Januar 1991, Seiten 87-95) ist ebenfalls bereits ein Mikroprozessorsystem mit redundanter Datenverarbeitung in drei Datenverarbeitungssystemen beschrieben, bei dem bei Ausfall eines systems durch Majoritätsentscheidung die fehlerhafte Stufe identifiziert wird und ein Übergang zu einer Notlauffunktion stattfindet. Alle Datenverarbeitungssysteme sind mit ausreichend Speicherplätzen für die individuelle Datenverarbeitung ausgerüstet.

Zu den sicherheitskritischen Regelungen der hier in Rede stehenden Art zählen u.a. die in die Bremsenfunktion eines Kraftfahrzeugs eingreifenden Regelungssysteme, die in großer Anzahl und großer Vielfalt auf dem Markt sind. Beispiele hierfür sind die Antiblockiersysteme (ABS), Antriebsschlupfregelungssysteme (ASR), Fahrstabilitätsregelungen (FDR, ESP), Fahrwerksregelungssysteme etc. Ein Ausfall eines solchen Regelungssystems führt zur Gefährdung der Fahrstabilität des Fahrzeugs. Daher wird die Funktionsfähigkeit der Systeme ständig überwacht, um beim Auftreten eines Fehlers die Regelung abschalten oder in einen für die Sicherheit weniger gefährlichen Zustand umschalten zu können. Noch kritischer sind Bremssysteme bzw. Kraftfahrzeug-Regelungssysteme, bei denen bei Ausfall der Elektronik keine Umschaltung auf ein mechanisches oder hydraulisches System möglich ist. Hierzu zählen Bremssystemkonzepte, wie "Brake-by-wire", die voraussichtlich in der Zukunft noch an Bedeutung gewinnen werden; die Bremsenfunktion ist bei solchen Systemen auf eine intakte Elektronik angewiesen.

Ein Beispiel für ein Microprozessorsystem zur Steuerung und Überwachung einer blockiergeschützten Fahrzeugbremsanlage ist aus der DE 32 34 637 C2 bekannt. Nach dieser Schrift werden die Eingangsdaten zwei identisch programmierten Microcomputern parallel zugeführt und dort synchron verarbeitet. Die Ausgangssignale und Zwischensignale der beiden Microcomputern werden auf Übereinstimmung geprüft. Wenn die Signale voneinander abweichen, wird die Regelung abgeschaltet.

Nach einem anderen bekannten System, nach dem die in der DE 41 37 124 A1 beschriebene Schaltung aufgebaut ist, werden die Eingangsdaten ebenfalls zwei Microcomputern parallel zugeführt, von denen jedoch nur einer die vollständige, aufwendige Signalverarbeitung ausführt. Der zweite Microcomputer dient vornehmlich zur Überwachung, weshalb die Eingangssignale nach Aufbereitung, Bildung von zeitlichen Ableitungen etc. mit Hilfe vereinfachter Regelalgorithmen und vereinfachter Regelpilosophie weiterverarbeitet werden können. Die vereinfachte Datenverarbeitung reicht zur Erzeugung von Signalen aus, die durch Vergleich mit den in dem aufwendigeren Microcomputer verarbeiteten Signalen Rückschlüsse auf den ordnungsgemäßen Betrieb des Systems zulassen.

Aus der DE 43 41 082 A1 ist ein Mikroprozessorsystem bekannt, das insbesondere für das Regelsystem einer blockiergeschützten Bremsanlage vorgesehen ist. Dieses bekannte System, das auf einem einzigen Chip untergebracht werden kann, enthält zwei Zentraleinheiten, in denen die Eingangsdaten parallel verarbeitet werden. Die Festwert- und die Schreib-Lese-Speicher, die an die beiden Zentraleinheiten angeschlossen sind, enthalten zusätzliche Speicherplätze für Prüfinformationen und umfassen jeweils einen Generator zur Erzeugung von Prüfinformationen. Die Ausgangssignale eines der beiden Zentraleinheiten werden zur Erzeugung der Steuersignale weiterverarbeitet, während die andere als passive Zentraleinheit lediglich zur Überwachung der aktiven Zentraleinheit dient.

Schließlich ist aus der DE 195 29 434 A1 bereits ein System der eingangs genannten Art bekannt, bei dem zwei synchron betriebene Zentraleinheiten auf einem oder auf mehreren Chips vorgesehen sind, die die gleichen Eingangsinformationen erhalten und das gleiche Programm abarbeiten. Die beiden Zentraleinheiten sind dabei über separate Bus-Systeme an die Festwert- und an die Schreib-Lese-Speicher sowie an Eingabe- und Ausgabeeinheiten angeschlossen. Die Bus-Systeme sind untereinander durch Treiberstufen bzw. Bypässe verbunden sind, die den beiden Zentraleinheiten ein gemeinsames Lesen und Abarbeiten der zur Verfügung stehenden Daten und Befehle ermöglichen. Das System ermöglicht eine Einsparung von Speicherplatz. Nur eine der beiden Zentraleinheiten ist (direkt) mit einem vollwertigen Festwert- und einem Schreib-Lese-Speicher verbunden, während die Speicherkapazität des zweiten Prozessors auf Speicherplätze für Prüfdaten (Paritätsüberwachung) in Verbindung mit einem Prüfdatengenerator beschränkt ist. Zugriff zu allen Daten besteht über die Bypäse. Dadurch sind beide Zentraleinheiten in der Lage, jeweils das vollständige Programm abzuarbeiten.

Alle vorgenannten Systeme beruhen grundsätzlich auf dem Vergleich redundant verarbeiteter Daten und der Erzeugung eines Fehlersignals, wenn Abweichungen auftreten. Beim Auftreten eines Fehlers oder Ausfall eines Systems kann dann die Regelung abgeschaltet werden. In keinem Fall ist eine Notlauffunktion, nämlich einer Fortsetzung der Regelung nach dem Auftreten des Fehlers, möglich. Eine solche Notlauffunktion wäre grundsätzlich nur durch Verdoppelung der Systeme in Verbindung mit einem Identifizieren und Abschalten der Fehlerquelle denkbar.

Der vorliegenden Erfindung liegt nun die Aufgabe zugrunde, ein Mikroprozessorsystem der eingangs genannten Art mit höchstens geringem Mehraufwand derart auszugestalten, dass beim Auftreten eines Fehlers eine Notlauffunktion möglich wird.

Es hat sich herausgestellt, dass diese Aufgabe durch das im Anspruch 1 beschriebene Mikroprozessorsystem gelöst werden kann. Die Besonderheit dieses Systems besteht darin, dass die drei Zentraleinheiten zusammen mit den Speichern, mit den Eingabe- und Ausgabeeinheiten und mit den Peripherie-Einheiten insgesamt zwei vollständige und ein unvollständiges Datenverarbeitungssystem bilden, die durch redundante Peripherie-Einheiten zu zwei vollständigen Regelungssignalkreisen erweitert und zusammengeschaltet sind, dass die Zentraleinheiten mit insgesamt mindestens doppelter Speicherkapazität im Vergleich zu der für ein nicht redundantes System benötigten Speicherkapazität ausgerüstet sind, wobei eine der Zentraleinheiten mit voller Speicherkapazität, die beiden anderen mit jeweils mindestens 50% der für ein nicht redundantes System benötigten Speicherkapazität ausgerüstet sind, und dass bei Ausfall einer Zentraleinheit und/oder einer zugehörigen Komponente oder beim Auftreten eines Fehlers in einem der Datenverarbeitungssysteme durch Majoritätsentscheidung die fehlerbehaftete Zentraleinheit identifiziert wird und ein Übergang in eine Notlauffunktion erfolgt, in der ein Regelungssignalkreis mit voller Speicherkapazität zur Verfügung steht und eine Ausgabe von Ausgangs oder Steuersignalen in Abhängigkeit von der fehlerbehafteten Zentraleinheit verhindert wird.

Bei dem erfindungsgemäßen System wird zugunsten eines besonders einfachen Regleraufbaus in bestimmten, seltenen Fällen auf eine Redundanz, d.h. auf eine Aufrechterhaltung der redundanten Datenverarbeitung verzichtet, weil das Auftreten eines weiteren Fehlers während einer kurzen Notlaufphase denkbar unwahrscheinlich ist und weil eine Abschaltung der Regelung nicht infrage kommt oder ein höheres Sicherheitsrisiko zur Folge hätte. Statt dessen werden beim Auftreten von Fehlern nach dem Identifizieren der Fehlerquelle bzw. der intakten Systeme die Auswirkungen von Fehlern unterbunden und die Steuerung und/oder Regelung auf Basis der fehlerfreien Systeme und Signale fortgesetzt.

Nach einem vorteilhaften Ausführungsbeispiel der Erfindung sind die drei Zentraleinheiten mit je einem Bus-System ausgerüstet und die Speicherplätze in den drei Zentraleinheiten derart verteilt angeordnet, dass beim Auftreten eines Fehlers in einem der Datenverarbeitungssysteme oder bei Ausfall einer Zentraleinheit den beiden übrigen insgesamt mindestens die volle Festwert- und Schreib-Lese-Speicherkapazität zur Verfügung steht, wobei über die Bypässe alle Zentraleinheiten mit den Speicherplätzen in Schreib- und Leserichtung und mit allen Eingabe- und Ausgabeeinheiten verbunden sind.

Die Erfindung geht gewissermaßen von dem vorgenannten, aus der DE 195 29 434 A1 bekannten System aus, das im Prinzip aus einem vollständigen und einem unvollständigen Datenverarbeitungssystem besteht, und erweitert dieses System durch ein zusätzliches, vollständiges Datenverarbeitungssystem mit den zugehörigen Peripherie-Einheiten. Auf diese Weise entstehen zwei vollständige Regelungssignalkreise oder Regelungssignalverarbeitungssysteme, die zu einem notlauffähigen Gesamtsystem zusammengeschaltet sind, das auch bei Ausfall eines Prozessors und Identifizieren der Fehlerquelle eine Aufrechterhaltung der Regelung erlaubt. Durch die erfindungsgemäße Zusammenschaltung der einzelnen Systeme oder Komponenten wird bei Ausfall eines Prozessors eine Fortsetzung der Steuerung und Regelung durch Einsatz der intakten Kreise möglich.

Der Gesamtaufwand an Speicherplätzen, der wesentlich den Preis des Mikroprozessorsystems bestimmt, wird im Vergleich zu einer Verarbeitung in einem nicht redundanten System lediglich verdoppelt, wobei die Aufteilung und Zuordnung der Speicherplätze zu den einzelnen Prozessoren in weiten Grenzen variabel ist; es muß sichergestellt sein, daß jeder einzelne Prozessor bzw. jede einzelne Prozessoreinheit das volle Programm abarbeiten kann.

Die erfindungsgemäße Ausgestaltung des Mikroprozessorsystems ermöglicht die Unterbringung aller oder der wesentlichen Komponenten, insbesondere sämtlicher Zentraleinheiten, Speicher, der Vergleicher und der Bypässe sowie ggf. auch der Eingabe- und Ausgabeeinheiten, auf einem einzigen Chip.

Die drei Zentraleinheiten bilden zusammen mit den Speichern, mit den Eingabe- und Ausgabeeinheiten und mit den Peripherie-Einheiten, einschließlich der Spannungsversorgung etc., insgesamt zwei vollständige und ein unvollständiges Datenverarbeitungssystem; die für einen vollständigen Programmablauf benötigten Speicherplätze sind auf die Datenverarbeitungssysteme aufgeteilt. Diese Datenverarbeitungsssysteme umfassen vorteilhafterweise jeweils eine Zentraleinheit, ein Bus-System sowie Festwert- und Schreib-Lese-Speicher, wobei die Speicherplätze derart auf die einzelnen Datenverarbeitungssysteme verteilt sind, daß beim Auftreten eines Fehlers und Übergang zur Notlauffunktion die intakten Systeme ausreichend Speicherplätze für die komplette Datenverarbeitung enthalten und das komplette Programm abarbeiten.

Ein weiteres Ausführungsbeispiel nach der Erfindung besteht darin, daß dieses für mehrere oder eine Kombination von Kraftfahrzeug-Regelungssystemen, wie Brake-by-wire, ABS, ASR, ASMS etc., ausgelegt ist, wobei die Notlauffunktion entweder die Aufrechterhaltung des Betriebs aller Regelungssysteme erfaßt oder nur auf die Aufrechterhaltung ausgewählter Regelungsfunktionen, zum Beispiel besonders sicherheitskritischer Funktionen, beschränkt ist.

In den Unteransprüchen sind noch weitere vorteilhafte Ausführungsbeispiele beschrieben.

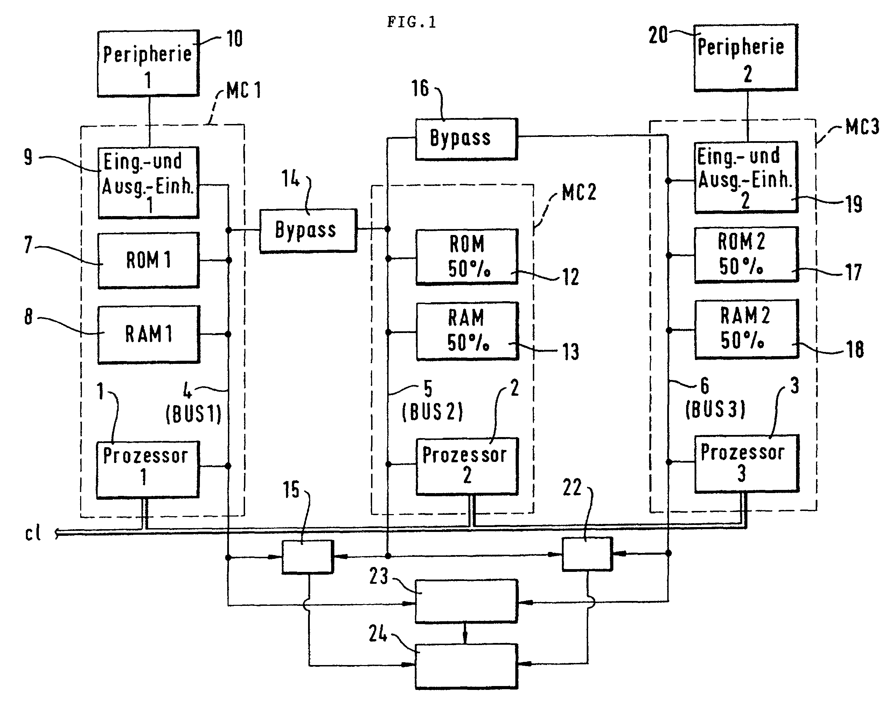

Aus der beigefügten Abbildung, welche in schematisch vereinfachter Darstellung die wesentlichen Komponenten eines Mikroprozessorsystems nach der Erfindung wiedergibt, und aus der nachfolgenden Beschreibung gehen weitere Einzelheiten der Erfindung hervor. Diese Abbildung dient zur Erläuterung des prinzipiellen Aufbaus und der Wirkungsweise eines Ausführungsbeispiels der Erfindung.

Die Abbildung bezieht sich auf ein Ein-Chip-Mikrocomputersystem, das drei synchron betriebene Prozessoren oder Zentraleinheiten 1,2,3, die auch als Rechner- oder, wegen ihrer Funktion, als Prozessorkerne bezeichnet werden. Jedem Prozessor ist ein Bus-System 4,5,6 zugeordnet. Die Zentraleinheiten 1,2,3 sind an eine synchrone Taktversorgung cl (common clock), die redundant ausgelegt ist, angeschlossen.

Die Zentraleinheit 1 bzw. der Prozessorkern 1 ist durch einen Festwertspeicher 7 (ROM 1), durch einen Schreib-Lese-Speicher 8 (RAM 1), durch eine Eingabe- und Ausgabeeinheit 9 zu einem vollständigen Datenverarbeitungssystem oder Mikrocomputer MC1 ergänzt. Die notwendigen Peripheriekomponenten (Peripherie 1) sind durch einen externen Block 10 symbolisiert. Zu den Peripheriekomponenten zählen die Spannungsversorgung, die Zuführung der Eingangssignale (z.B. der Sensorsignale bei einem KFZ-Regelungssystem) und die Aktuator- oder Ventilansteuerung etc. mit Hilfe der Ausgangsdaten oder -signale der Datenverarbeitungssysteme.

Ein zweites, unvollständiges Datenverarbeitungssystem oder ein Mikrocomputer MC2, in dem die Zentraleinheit 2 untergebracht ist, enthält im wiedergegebenen Ausführungsbeispiel lediglich Speicherplätze für 50% der für ein nicht redudantes System benötigten Daten. Symbolisch dargestellt sind im Inneren des Mikrocomputers MC2 Festwertspeicherplätze 12 und Speicherplätze 13 für die Daten im Schreib-Lese-Bereich.

Über einen Bypass 14 sind BUS 1 (Bus-System 4) und BUS 2 (Bus-System 5) miteinander verbunden. Der Bypass 14 ermöglicht der Zentraleinheit 1 ein Lesen der in den Speicherplätzen 12, 13 gespeicherten Daten und gestattet einen Datenfluß von den Speichern 7,8 und dem Prozessorkern 1 des Mikrocomputers MC1 zu dem Mikrocomputer MC2, insbesondere zu der Zentraleinheit 2. Auf diese Weise ist ein redundantes Abarbeiten des vollständigen Datenverarbeitungs-Programms durch beide Zentraleinheiten 1,2 gewährleistet. Noch weitere Einzelheiten zu dem Aufbau und der Funktionsweise solcher Mikroprozessorsysteme sind der vorgenannten DE 195 29 434 A1 zu entnehmen.

Die Datenverarbeitungs-Ergebnisse beider Systeme MC1, MC2 bzw. Prozessoren 1,2 werden, wie ebenfalls in der vorgenannten Schrift erläutert ist, mit Hilfe eines Vergleichers 15 auf Übereinstimmung überwacht; es ist ein unmittelbarer Vergleich der Ausgangssignale beider Prozessoren mit Hilfe eines Hardware-Vergleichers 15 vorgesehen.

Ein wesentliches Merkmal des Mikroprozessorsystems nach der Erfindung und des in der Abbildung dargestellten Ausführungsbeispiels besteht nun darin, daß das eben beschriebene, aus der DE 195 29 434 A1 bekannte System durch ein weiteres Datenverarbeitungssystem, nämlich durch einen Mikrocomputer MC3, der ebenfalls mit dem unvollständigen Mikrocomputer MC2 und auch mit dem Mikrocomputer MC1 zusammenwirkt, erweitert ist. Ein Teil der Funktionen dieses zusätzlichen Mikrocomputersystems (MC3), nämlich das Speichern eines Teils der Daten, z.B. von 50% der Festwert- und der Schreib-Lese-Daten, wird allerdings von dem zweiten Mikrocomputersystem MC2 und ggf. auch von dem ersten System MC1 wahrgenommen, weil das Gesamtsystem für die Gewährleistung der Redundanzfunktion insgesamt nur die doppelte Speicherkapazität im Vergleich zu einem nicht redundanten, das gleiche Programm abarbeitenden System benötigt. Die Speicherkapazität muß dabei auf die drei Datenverarbeitungssysteme MC1, MC2, MC3 derart verteilt werden, daß bei Ausfall eines Systems die verbleibenden Systeme einen ausreichenden Speicherplatz, nämlich mindestens 100%, bieten. In einen bevorzugten Ausführungsbeispiel sind das Mikroprozessorsystem MC1 mit 100%, die beiden Mikrocomputersysteme MC2 und MC3 mit jeweils 50% der für ein nicht redundantes System benötigten Speicherplätze ausgerüstet.

Das dritte Mikrocomputersystem MC3 ist mit dem (unvollständigen) Mikrocomputer MC2 ebenfalls durch einen Bypass 16 verbunden. Dieser Bypass hat die gleiche Funktion wie der bereits eingehend beschriebene Bypass 14 und ermöglicht daher auch den Zentraleinheiten 2 und 3 die redundante Verarbeitung aller Eingangsdaten.

Das Mikroprozessorsystem MC3 enthält einen Festwertspeicher 17 (ROM 2), einen Schreib-Lese-Speicher 18 (RAM 2), eine Eingabe- und Ausgabeeinheit 19 und Peripherie-Komponenten 20 (Peripherie 2). MC3 ist im dargestellten Ausführungsbeispiel ein vollständige Mikrocomputer, für den allerdings, wie zuvor erläutert, eine reduzierte Speicherkapazität genügt; die Kapazität der Speicher in MC2 Und MC3 beträgt zusammen (mindestens) 100%.

Über die Bypässe 14,16 ist ein Datenfluß in beiden Richtungen vom BUS 1 (Bus-System 4) zum BUS 3 (Bus-System 6) gegeben. Zur weiteren Erhöhung der Ausfallsicherheit könnte es eventuell sinnvoll sein, über einen zusätzlichen Bypass, der nicht dargestellt ist, eine direkte Verbindung zwischen diesen beiden Bus-Systemen 4,6 (BUS 1 und BUS 3) herzustellen.

Der Mikrocomputer MC3 besitzt hier den gleichen Aufbau und die gleichen Komponenten wie der Mikrocomputer MC1. Folglich sind bei dem erfindungsgemäßen Mikroprozessorsystem auch die Eingabe- und Ausgabeeinheiten 9,19 und die Peripherie-Komponenten 10, 20, zu denen die Spannungsversorgung, der Sensorsignaleingang und die Aktuatoransteuerung zählen, zweimal vorhanden.

Die Ausgangssignale oder Datenverarbeitungsergebnisse des dritten Mikrocomputers MC3 werden mit Hilfe eines Vergleichers 22 auf Übereinstimmung mit den Ergebnissen oder Ausgangssignalen des Mikrocomputers MC2 bzw. der Zentraleinheit 2 sowie in gleicher Weise mit Hilfe des Vergleichers 23 auf Übereinstimmung mit den Ergebnissen des MC1 bzw. der Zentraleinheit 1 überprüft. Dadurch ist nicht nur eine Fehlererkennung, sondern auch eine Identifizierung des Systems, in dem der Fehler liegt, möglich. In einer Identifizierungs-Stufe 24, die vorzugsweise redundant ausgeführt ist und der die Ausgangssignale der Vergleicher 15,22,23 zugeleitet werden, wird durch eine Majoritätsentscheidung die Fehlerquelle erkannt und daraufhin das System auf eine Notlauffunktion umgeschaltet. Dies bedeutet, daß die Ausgabe von Steuersignalen in Abhängigkeit von den fehlerhaften Datenverarbeitungsergebnissen verhindert und statt dessen auf das intakte System umgeschaltet wird.

Das erfindungsgemäße System läßt sich mit vergleichsweise geringem Herstellungsaufwand realisieren. Im Prinzip genügt - im Vergleich zu dem bekannten System, das keinen Notlauf zuläßt - das Hinzufügen eines Prozessorkerns und die Erhöhung der Speicherkapazität auf das Doppelte. Eine klassische Lösung mit Notlauffunktion würde mindestens den dreifachen Speicheraufwand erfordern.

Wird die Speicherkapazität um einige Speicherplätze im Vergleich zu dem Minimalwert von 200% erhöht, z.B. um Speicherplätze für je ein Paritätsbit, ist eine Fehlerlokalisierung im Speicherbereich auch über Hardware-Majoritätsentscheid möglich. Wird die Minimalauslegung der Speicherkapazität von 200% gewählt,läßt sicht eine Fehlerlokalisierung z.B. durch Quersummenbildung über Speicherblöcke oder durch andere software-technische Maßnahemen realisieren.

Die mit Hilfe der erfindungsgemäßen Auslegung erreichte Reduzierung der Speicherkapazität im Vergleich zu den bekannten Systemen ist ein entscheidender Vorteil, weil die Kosten des Gesamtsystems maßgeblich von der Größe der Arbeitsspeicher (Festwert- und Schreib-Lese-Speicher) bestimmt werden.

Der Aufwand für die vergleicher 15, 22, 23, die eine Identitätsüberwachung durchführen, ist minimal. Der Austausch von Signalen zwischen den einzelnen Mikrocomputern über die Bypässe erfordert keinen nennenswerten Aufwand. Programmtechnisch wird eine Software für ein scheinbares Einprozessorsystem realisiert; es werden keine Softwarestrukturen benötigt, die einen Austausch von Signalen zwischen den Mikrocomputern realisieren oder Signale auf Gleichheit oder Ähnlichkeit überprüfen.

Grundsätzlich ist es auch möglich, beim Auftreten eines internen Rechnerfehlers die Übernahme der Eingangsinformation und der Signalausgabe durch den fehlerfreien Kreis durchzuführen bzw. dem fehlerfreien Kreis zu übertragen. Dies führt zu weiteren Vereinfachungen und Systemfunktionen.

## Patentansprüche

1. Mikroprozessorsystem für KFZ-Regelungssysteme mit redundanter Datenverarbeitung, insbesondere für sicherheitskritische Regelungen, mit drei Zentraleinheiten (CPU; 1,2,3), die über separate Bus-Systeme (4,5,6) mit Festwertspeichern und Schreib-Lesespeichern (7, 8, 12, 13, 17, 18), mit Eingabe- und Ausgabeeinheiten (9,19) und mit Vergleichern (15,22,23,24), die die Ergebnisse und/ oder Zwischenergebnisse der Datenverarbeitung auf Übereinstimmung überprüfen, zu mehreren Datenverarbeitungssystemen (MC1, MC2, MC3) verbunden sind, wobei die Zentraleinheiten (1,2,3) über die Bus-Systeme (4,5,6) miteinander kommunizieren und das gleiche Programm abarbeiten und wobei die Bus-Systeme untereinander durch Bypässe (14,16) verbunden sind, die den Zentraleinheiten ein gemeinsames Lesen und Abarbeiten der anstehenden Daten und Befehle ermöglichen, **dadurch gekennzeichnet, dass** die drei Zentraleinheiten (1,2,3) zusammen mit den Speichern (7, 8, 12, 13, 17, 18), mit den Eingabe- und Ausgabeeinheiten (9,10) und mit den Peripherie-Einheiten (10,20) insgesamt zwei vollständige und ein unvollständiges Datenverarbeitungssystem bilden, die durch redundante Peripherie-Einheiten (10,20) zu zwei vollständigen Regelungssignalkreisen erweitert und zusammengeschaltet sind, dass die Zentraleinheiten (1,2,3) mit insgesamt mindestens doppelter Speicherkapazität im Vergleich zu der für ein nicht redundantes System benötigten Speicherkapazität ausgerüstet sind, wobei eine (1) der Zentraleinheiten (1,2,3) mit voller Speicherkapazität, die beiden anderen (2,3) mit jeweils mindestens 50% der für ein nicht redundantes System benötigten Speicherkapazität ausgerüstet sind, und dass bei Ausfall einer Zentraleinheit (1, 2, 3) und/oder einer zugehörigen Komponente oder beim Auftreten eines Fehlers in einem der Datenverarbeitungssysteme (MC1,MC2,MC3) durch Majoritätsentscheidung die fehlerbehaftete Zentraleinheit (1,2,3) identifiziert wird und ein Übergang in eine Notlauffunktion erfolgt, in der ein Regelungssignalkreis mit voller Speicherkapazität zur Verfügung steht und eine Ausgabe von Ausgangs oder Steuersignalen in Abhängigkeit von der fehlerbehafteten Zentraleinheit (1,2,3) verhindert wird.

2. Mikroprozessorsystem nach Anspruch 1, **dadurch gekennzeichnet, dass** die drei Zentraleinheiten (1,2,3) mit je einem Bus-System (4,5,6) ausgerüstet sind und dass die Speicherplätze in den drei Zentraleinheiten (1,2,3) derart verteilt angeordnet sind, dass beim Auftreten eines Fehlers in einem der Datenverarbeitungssysteme (MC1, MC2, MC3) oder bei Ausfall einer Zentraleinheit den beiden übrigen insgesamt mindestens die volle Festwert und Schreib-Lese-Speicherkapazität (7,12,17; 8,13,18) zur Verfügung steht, wobei über die Bypässe (14,16) alle Zentraleinheiten (1,2,3) mit den Speicherplätzen in Schreib- und Leserichtung und mit allen Eingabe- und Ausgabeeinheiten (9,10) verbunden sind.

3. Mikroprozessorsystem nach Anspruch 1 oder 2, **dadurch gekennzeichnet, dass** den Vergleichern (15,22,23) jeweils die Datenverarbeitungsergebnisse bzw. Ausgangssignale von zwei Zentraleinheiten (1,2,3) zuführbar sind.

4. Mikroprozessorsystem nach einem oder mehreren der Ansprüche 1 bis 3, **dadurch gekennzeichnet, dass** zumindest die Zentraleinheiten (1,2,3) mit den Bus-Systemen (4,5,6), die Speicher (7,8,12,13,17,18), die Bypässe (14,16), die Eingabe- und Ausgabeeinheiten (9,19), Vergleicher (15, 22, 23) und Identifizierungsstufen (24) auf einem gemeinsamen Chip angeordnet sind.

5. Mikroprozessorsystem nach einem oder mehreren der Ansprüche 1 bis 4, **dadurch gekennzeichnet, dass** dieses für mehrere oder eine Kombination von Kraftfahrzeug-Regelungssystemen, wie Brake-by-wire, ABS, ASR, ASMS etc., ausgelegt ist und dass die Notlauffunktion die Aufrechterhaltung des Betriebs aller Regelungssysteme erfasst.

6. Mikroprozessorsystem nach einem oder mehreren der Ansprüche 1 bis 5, **dadurch gekennzeichnet, dass** dieses für mehrere oder eine Kombination von Kraftfahrzeug-Regelungssystemen ausgelegt ist und dass die Notlauffunktion auf die Aufrechterhaltung des Betriebs ausgewählter Regelungsfunktionen, zum Beispiel besonders sicherheitskritischer Funktionen, beschränkt ist.

## Claims

1. Microprocessor system for automotive vehicle control systems with redundant data processing, especially for safety-critical control operations, including three central units (CPU; 1,2,3) that are connected, by way of separate bus systems (4,5,6), to read-only memories and random-access memories (7,8,12,13,17,18), to input and output units (9,19), and to comparators (15,22,23,24) which check the results and/or intermediate results of data processing for correlation, to provide a plurality of data processing systems (MC1,MC2,MC3), wherein the central units (1,2,3) communicate with each other by way of the bus systems (4,5,6) and execute the same program, and wherein the bus systems are interconnected by bypasses (14,16) which enable the central units to jointly read and execute the existing data and commands,
**characterized in that** the three central units (1,2,3), along with the memories (7,8,12,13,17,18), the input and output units (9,10), and the periphery units (10, 20), form two complete and one incomplete data processing systems in total, which are extended by redundant periphery units (10,20) to provide two complete control signal circuits and are interconnected in such a manner that the central units (1,2,3) in total are equipped with at least the double memory capacity compared to the memory capacity required for a non-redundant system, wherein one (1) of the central units (1,2,3) is equipped with the full memory capacity, while the other two units (2,3) are equipped with at least 50 percent of the memory capacity required for a non-redundant system, and **in that** upon failure of a central unit (1,2,3) and/or an associated component or upon the occurrence of an error in one of the data processing systems (MC1,MC2,MC3), the faulty central unit (1,2,3) is identified by a majority decision and a change-over to an emergency operation mode is effected where a control signal circuit with a full memory capacity is available and an output of output signals or control signals as a function of the faulty central unit (1,2,3) is prevented.

2. Microprocessor system as claimed in claim 1,
**characterized in that** the three central units (1,2,3) are equipped with each one bus system (4,5,6), and **in that** the memory locations in the three central units (1,2,3) are distributed such that, upon the occurrence of an error in any one of the data processing systems (MC1,MC2,MC3) or upon failure of one central unit, the other two central units in total have available at least the full read-only and random-access memory capacity (7,12,17; 8,13,18), and all central units (1,2,3) are connected to the memory locations in the write and read directions and to all input and output units (9,10) by way of the bypasses (14,16).

3. Microprocessor system as claimed in claim 1 or 2,
**characterized in** the data processing results or output signals of two central units (1,2,3) can be sent to the comparators (15,22,23), respectively.

4. Microprocessor system as claimed in any one or more of claims 1 to 3,
**characterized in that** at least the central units (1,2,3) with the bus systems (4,5,6), the memories (7,8,12,13,17,18), the bypasses (14,16), the input and output units (9,19), comparators (15,22,23), and identification units (24) are arranged on one joint chip.

5. Microprocessor system as claimed in any one or more of claims 1 to 4,
**characterized in that** the system is configured for a plurality of, or a combination of, automotive vehicle control systems such as brake-by-wire, ABS, TCS, ASMS, etc., and **in that** the emergency operation mode covers maintaining the operation of all control systems.

6. Microprocessor system as claimed in any one or more of claims 1 to 5,
**characterized in that** the system is configured for a plurality of, or a combination of, automotive vehicle control systems, and **in that** the emergency operation mode is limited to maintaining the operation of selected control functions, for example, functions which are especially critical in terms of safety.

## Revendications

1. Dispositif a microprocesseur pour dispositif de régulation de véhicule automobile à traitement de données redondant, notamment pour des régulations critiques en ce qui concerne la sécurité, comprenant trois unités centrales (CPU ; 1, 2, 3), qui sont reliées, au moyen de dispositifs de bus (4, 5, 6) séparés, à des mémoires mortes et des mémoires vives (7, 8, 12, 13, 17, 18), à des unités d'introduction et de délivrance (9, 19) et à des comparateurs (15, 22, 23, 24) qui contrôlent les résultats et/ou résultats intermédiaires du traitement de données en ce qui concerne une concordance, de façon à constituer plusieurs dispositifs de traitement de données (MC1, MC2, MC3), les unités centrales (1, 2, 3) communiquant entre elles au moyen des dispositifs de bus (4, 5, 6) et traitant le même programme, tandis que les dispositifs de bus sont reliés entre eux par des dérivations (14, 16) qui permettent aux unités centrales une lecture et un traitement communs des données et ordres existants, **caractérisé en ce qu'**en commun avec les mémoires (7, 8, 12, 13, 17, 18), avec les unités d'introduction et de délivrance (9, 10) et avec les unités périphériques (10, 20), les trois unités centrales (1, 2, 3) constituent en tout deux dispositifs de traitement de données complets et un dispositif de traitement de données incomplet qui font l'objet d'une extension et d'une interconnexion, au moyen d'unités périphériques (10, 20) redondantes, de façon à donner deux circuits de signal de régulation complets, **en ce que** les unités centrales (1, 2, 3) sont pourvues en tout d'au moins une double capacité de mémoire en comparaison de la capacité de mémoire nécessaire pour un dispositif non redondant, l'une (1) des unités centrales (1, 2, 3) étant pourvue d'une capacité de mémoire totale et les deux autres (2, 3) chacune d'au moins 50% de la capacité de mémoire nécessaire pour un dispositif non redondant, et **en ce qu'**en cas de défaillance d'une unité centrale (1, 2, 3) et/ou d'un composant associé ou en cas d'apparition d'une erreur dans l'un des dispositifs de traitement de données (MC1, MC2, MC3), l'unité centrale (1, 2, 3) entachée d'erreur est identifiée par décision de majorité et il se produit une transition vers une fonction de secours dans laquelle un circuit de signal de régulation à capacité de mémoire totale est disponible et une délivrance de signaux de sortie ou de commande en fonction de l'unité centrale (1, 2, 3) entachée d'erreur est empêchée.

2. Dispositif à microprocesseur suivant la revendication 1, **caractérisé en ce que** les trois unités centrales (1, 2, 3) sont pourvues chacune d'un dispositif de bus (4, 5, 6) et **en ce que** les emplacements de mémoire sont disposés d'une façon répartie dans les trois unités centrales (1, 2, 3) d'une manière telle que, lors de l'apparition d'une erreur dans l'un des dispositifs de traitement de données (MC1, MC2, MC3) ou lors d'une défaillance d'une unité centrale, on dispose pour les deux autres d'en tout au moins la capacité de mémoires mortes et mémoires vives (7, 12, 17 ; 8, 13, 18) totale, tandis qu'au moyen des dérivations (14, 16), toutes les unités centrales (1, 2, 3) sont reliées aux emplacements de mémoire dans le sens d'écriture et le sens de lecture et à toutes les unités d'introduction et de délivrance (9, 10).

3. Dispositif à microprocesseur suivant la revendication 1 ou 2, caractérisé ce que les résultats de traitement de données ou les signaux de sortie provenant de deux unités centrales (1, 2, 3) peuvent être chaque fois acheminés aux comparateurs (15, 22, 23).

4. Dispositif à microprocesseur suivant une ou plusieurs des revendications 1 à 3, **caractérisé en ce qu'**au moins les unités centrales (1, 2, 3), avec les dispositifs de bus (4, 5, 6), les mémoires (7, 8, 12, 13, 17, 18), les dérivations (14, 16), les unités d'introduction et de délivrance (9, 19), les comparateurs (15, 22, 23) et les étages d'identification (24) sont disposées sur une puce commune.

5. Dispositif à microprocesseur suivant une ou plusieurs des revendications 1 à 4, **caractérisé en ce que** celui-ci est agencé pour plusieurs dispositifs de régulation de véhicule automobile, tels que frein par fil, ABS, ASR, ASMS, etc., ou une combinaison de ceux-ci et **en ce que** la fonction de secours détecte le maintien du fonctionnement de tous les dispositifs de régulation.

6. Dispositif a microprocesseur suivant une ou plusieurs des revendications 1 à 5, **caractérisé en ce que** celui-ci est agencé pour plusieurs dispositifs de régulation de véhicule automobile ou une combinaison de ceux-ci et **en ce que** la fonction de secours est limitée au maintien du fonctionnement de fonctions de régulation sélectionnées, par exemple de fonctions particulièrement critiques en ce qui concerne la sécurité.
